# EUROPEAN PATENT APPLICATION

(11) **EP 1 936 850 A1**
(43) Date of publication of application: **25.06.2008**
(21) Application number: 06822933.5
(22) Date of filing: 02.11.2006
(51) Int. Cl.: H04J 11/00, H04B 7/26, H04J 1/02

(54) **RADIO TRANSMISSION DEVICE, AND RADIO TRANSMISSION METHOD**

(30) Priority: 04.11.2005 JP 2005321111
(71) Applicant: MATSUSHITA ELECTRIC INDUSTRIAL CO., LTD., Osaka 571-8501 (JP)
(72) Inventor: MATSUMOTO, Atsushi Matsushita Electric Industrial Co., Ltd., 2-1-61, Shiromi, Chuo-ku Osaka 540-6207 (JP); IMAMURA, Daichi Matsushita Electric Industrial Co., Ltd., 2-1-61, Shiromi, Chuo-ku Osaka 540-6207 (JP); FUTAGI, Sadaki Matsushita Electric Industrial Co., Ltd., 2-1-61, Shiromi, Chuo-ku Osaka 540-6207 (JP); IWAI, Takashi Matsushita Electric Industrial Co., Ltd., 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/322015
(87) International publication number: WO 2007/052767

(57) **Abstract**

Provided is a radio transmission device, which is enabled to improve a reception quality by improving the channel estimation precision of specific data such as control data. In this device, a mapping control unit (109) acquires pilot position information (at ST1010), and determines a resource block or a candidate for the mapping position of control channel data (at ST1020). The mapping control unit (109) also determines a resource block other than that candidate as the mapping position of other data (at ST1030). Moreover, the mapping control unit (109) generates a mapping control signal for instructing a mapping unit (104) the candidate of the mapping position of the control data and the mapping position of other data, that is, a mapping method, and outputs the generated mapping control signal to the mapping unit (104).

## Description

### Technical Field

The present invention relates to a radio transmitting apparatus and a radio transmission method employing a single carrier transmission scheme.

### Background Art

Currently, in 3GPP RAN LTE (Long Term Evolution), as an uplink transmission scheme, SC-FDMA (Single Carrier-Frequency Division Multiple Access), that is, a single carrier transmission scheme, is studied. Further, a method for multiplexing pilots, user data, control data and the like in this SC-FDMA environment is also studied.

For example, as a method for multiplexing pilots transmitted by a plurality of users, there is a promising method of multiplexing pilots transmitted by the users based on a distributed-FDMA scheme to implement both channel estimation and CQI (Channel Quality Indicator) estimation use. On the other hand, as a method for multiplexing user data and control data, a localized-FDMA scheme is promising. Further, Non-Patent Documents 1 and 2 disclose examples of time multiplexing (TDM: Time Division Multiplexing) control data and user data and transmitting the result.
Non-Patent Document 1: R1-050882, Samsung, "Data and Control Multiplexing in SC-FDMA Uplink for Evolved UTRA, " 3GPP TSG RAN WG1 Meeting #42, London, UK, 29 August - 2 September, 2005
Non-Patent document 2: R1-050850, NTT DoCoMo, Fujitsu, NEC, SHARP, "Physical Channels and Multiplexing in Evolved UTRA Uplink," 3GPP TSG RAN WG1 Meeting #42, London, UK, 29 August - 2 September, 2005

### Disclosure of Invention

### Problems to be Solved by the Invention

However, the techniques disclosed in Non-Patent Documents 1 and 2 have the following problems.

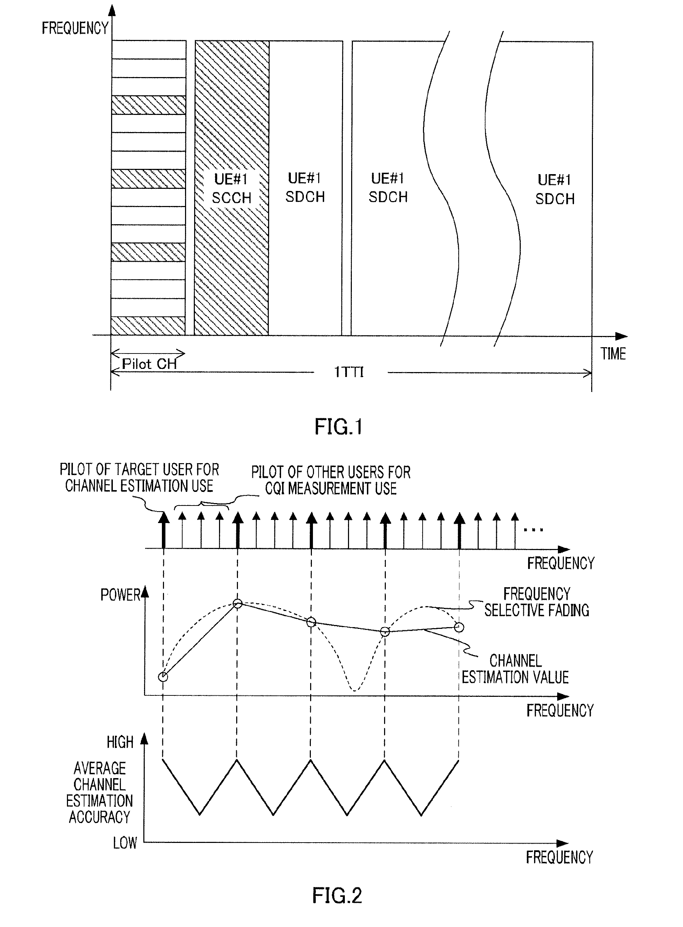

FIG.1 shows a frame format equivalent to one TTI (Transmission Timing Interval) disclosed in Non-Patent Documents 1 and 2. The signal of the leftmost vertical column is a pilot channel, and the pilots are multiplexed based on a distributed-FDMA scheme. Further, the rest of the signals are control data (SCCH: Shared Control Channel) and user data (SDCH: Shared Data Channel), and the control data and the user data are time-multiplexed. Further, in the pilot channel, pilots in diagonal parts are the pilots for UE (User Equipment) #1, and in the rest of the signals, signals in diagonal parts are SCCHs for UE#1.

FIG.2 illustrates a relationship between pilots multiplexed based on the distributed-FDMA scheme and channel estimation accuracy.

The upper part of FIG.2 schematically shows a signal that multiplexes pilots for channel estimation use and pilots of other users for CQI measurement use in the frequency domain based on the distributed-FDMA scheme. The middle part of FIG.2 shows an example of a frequency response of a channel in a frequency selective fading environment and channel estimation values estimated using pilot symbols. Furthermore, the lower part of FIG.2 shows average estimation accuracy of the channel estimation value at each position of pilots for channel estimation use.

As shown in the middle part of FIG.2, channel estimation values at frequency positions where pilot symbols for channel estimation use are not arranged, can be estimated from channel estimation values at frequency positions where adjacent pilot symbols are arranged, through interpolation and the like. Therefore, as shown in the lower part of FIG.2, when the frequency response of a channel changes substantially between pilot symbols for channel estimation use, channel estimation values at frequency positions where pilot symbols for channel estimation use are not arranged (valley parts in the graph of the lower part of FIG.2) cannot be estimated correctly. That is, the estimation accuracy of the channel estimation value is high at frequency positions where pilots for channel estimation use are arranged, while the estimation accuracy of the channel estimation value is low between the pilots for channel estimation use.

Further, in the case of single carrier transmission, unlike the case of multicarrier transmission such as OFDM, when specific frequency components are distorted, the distortion covers the whole of the time waveform and is superimposed on the whole of the time waveform. Therefore, when the frame formats disclosed inNon-Patent Documents 1 and 2 are used, channel estimation accuracy decreases between pilots according to channel states (frequency selectivity), and so even if a radio receiving apparatus performs equalizing processing, required quality may not be satisfied. Particularly, when channel estimation accuracy of a channel that requires high channel estimation accuracy, such as a control data channel, decreases, quality degradation is not limited to control data alone, but the overall received signal quality degrades.

It is therefore an object of the present invention to provide a radio transmitting apparatus and a radio transmission method that improve received quality by improving channel estimation accuracy of specific data such as control data.

### Means for Solving the Problem

The radio transmitting apparatus of the present invention includes: a pilot multiplexing section that performs frequency division multiplexing on pilots to a first time slot; a data multiplexing section that performs frequency division multiplexing on data other than the pilots to time slots other than the first time slot; and a controlling section that controls the data multiplexing section such that, out of the data other than the pilots, data that requires high channel estimation accuracy is multiplexed in same frequencies as the pilots.

### Advantageous Effect of the Invention

According to the present invention, it is possible to improve channel estimation accuracy of specific data such as control data and improve received quality.

### Brief Description of Drawings

FIG.1 shows the frame format disclosed in Non-Patent Documents 1 and 2;
FIG.2 illustrates a relationship between pilots multiplexed based on the distributed-FDMA scheme and channel estimation accuracy;
FIG.3 is a block diagram showing the main configuration of a radio transmitting apparatus according to Embodiment 1;
FIG.4 is a flowchart showing steps of processing of determining a mapping method according to Embodiment 1;
FIG.5 shows an example of a single carrier frame format outputted from a mapping section according to Embodiment 1;
FIG.6 shows a block diagram showing the main configuration of a radio transmitting apparatus according to Embodiment 2;
FIG.7 shows an example of a single carrier frame format outputted from a mapping section according to Embodiment 2;
FIG.8 shows an example of a single carrier frame format outputted from the mapping section according to Embodiment 2;
FIG.9 is a block diagram showing the main configuration of a radio receiving apparatus according to Embodiment 2;
FIG.10 shows an example of a single carrier frame format outputted from a mapping section according to Embodiment 3;
FIG.11 shows another example of the single carrier frame format outputted from the mapping section according to Embodiment 3;
FIG.12 shows an example of a single carrier frame format outputted from a mapping section according to Embodiment 4;
FIG.13 shows an example of a single carrier frame format outputted from the mapping section according to Embodiment 4;
FIG.14 is a block diagram showing the main configuration of a radio transmitting apparatus according to Embodiment 5;
FIG.15 is a block diagram showing the main configuration of the radio transmitting apparatus according to Embodiment 5; and
FIG.16 shows an example of a signal that multiplexes data for user #1 and data for user #2 in air.

### Best Mode for Carrying out the Invention

Embodiments of the present invention will be described in detail below with reference to the accompanying drawings. In this specification, data 1 refers to control data and data 2 refers to user data.

### (Embodiment 1)

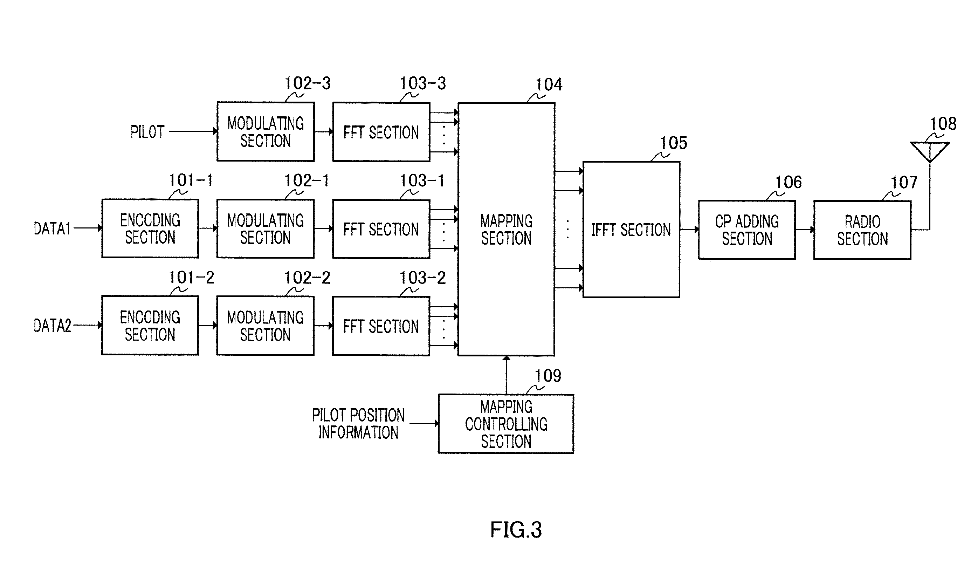

FIG.3 is a block diagram showing the main configuration of the radio transmitting apparatus according to Embodiment 1 of the present invention.

The radio transmitting apparatus according to this embodiment has encoding sections 101-1 and 101-2, modulating sections 102-1, 102-2 and 102-3, FFT sections 103-1, 103-2 and 103-3, mapping section 104, IFFT section 105, CP adding section 106, radio section 107, antenna 108 and mapping controlling section 109. A plurality of components having the same functions will be assigned the same reference numerals, and different branch numbers are further assigned following the reference numerals to distinguish between the components.

The sections of the radio transmitting apparatus according to this embodiment perform the following operations.

Encoding section 101-1 performs predetermined error correcting encoding such as turbo encoding and the like on inputted data 1 and outputs the encoded signal to modulating section 102-1. In the same way, encoding section 101-2 performs predetermined error correcting encoding on inputted data 2 and outputs the encoded signal to modulating section 102-2.

Modulating section 102-1 performs predetermined modulating processing such as BPSK (Binary Phase Shift Keying) and QPSK (Quadrature Phase Shift Keying) on the signal outputted from encoding section 101-1, and outputs the modulated signal to FFT section 103-1. In the same way, modulating section 102-2 performs predetermined modulating processing on the signal outputted from encoding section 101-2, and outputs the modulated signal to FFT section 103-2. Modulating section 102-3 performs predetermined modulating processing on an inputted pilot signal and outputs the modulated signal to FFT section 103-3. Data 1 (control data) is more important than data 2 (user data), and a pilot is more important than data 1, and so, generally, a modulation scheme that is more robust against errors is employed as a modulation scheme for the more important data.

FFT section 103-1 performs a fast Fourier transform (FFT) on the modulated signal outputted from modulating section 102-1, to convert the modulated signal, which is a time domain signal, into a frequency domain signal, and outputs the signal to mapping section 104. In the same way, FFT sections 103-2 and 103-3 perform a fast Fourier transform on the modulated signals outputted from modulating sections 102-2 and 102-3, and outputs the resulting frequency domain signals to mapping section 104.

Mapping controlling section 109 receives information relating to the positions of pilot signals in the frequency domain in a transmission frame (pilot position information). Mapping controlling section 109 determines a mapping method for data 1 and data 2 based on this pilot position information, and designates the determined mapping method to mapping section 104 using a mapping control signal.

Mapping section 104 maps the pilot signals in the frequency domain according to the pilot position information reported through mapping controlling section 109, in a time slot for transmitting pilot signals (time slot for pilot). Further, in time slots for transmitting data, mapping section 104 maps data 1 and data 2 in the frequency domain, which are outputted from FFT sections 103-1 and 103-2, to subcarriers of a transmission frame, based on the designation frommapping controlling section 109, and outputs the mapped signal to IFFT section 105.

IFFT section 105 performs an inverse fast Fourier transform (IFFT) on data which is mapped in the frequency domain and outputted from mapping section 104, and outputs the resulting time domain signal to CP adding section 106. The configuration from FFT sections 103-1 to 103-3 to IFFT section 105, that is, the configuration for performing a series of processing of converting a time domain signal into frequency domain data at FFT sections 103-1 to 103-3, performing processing such as changing the mapping of frequency domain data at mapping section 104, and converting frequency domain data into a time domain signal at IFFT section 105, is particularly referred to as DFT-spread-OFDM (Discrete Fourier Transform-spread-Orthogonal Frequency Division Multiplex).

CP adding section 106 adds a CP (Cyclic Prefix) to the time domain signal outputted from IFFT section 105 and outputs the result to radio section 107.

Radio section 107 up-converts a baseband signal outputted from CP adding section 106 into a radio signal of a radio frequency band and transmits the signal through antenna 108.

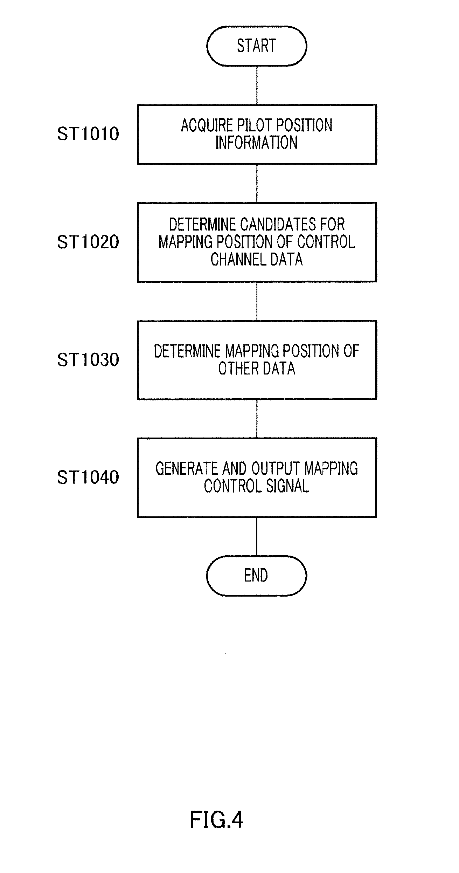

FIG.4 is a flowchart showing processing steps for determining a mapping method at mapping controlling section 109. In this flow, "ST" stands for a step.

Mapping controlling section 109 acquires pilot position information (ST1010), and determines candidates for mapping positions of control channel data based on this information (ST1020). For example, when the pilot position information shows the positions of pilot signals in the frequency domain in a transmission frame, specifically, subcarrier numbers of positions where the pilot signals are multiplexed, mapping controlling section 109 sets these subcarrier numbers as information showing candidates for the mapping positions for control channel data. By this means, control channel data is frequency-multiplexed in the same frequencies as the frequencies where the pilots are multiplexed, so that it is possible to improve received quality of control data.

Further, mapping controlling section 109 determines subcarriers other than the above-described candidates for the mapping positions for control channel data, as mapping positions for other data (user data) (ST1030). Mapping controlling section 109 generates a mapping control signal for designating candidates for the mapping positions of the control data and mapping positions (i.e., mapping method) for other data to mapping section 104, and outputs the signal to mapping section 104 (ST1040).

Mapping section 104 maps the control data and other data according to the mapping method determined through the above-described processing. To be more specific, mapping section 104 maps the control data to the candidates for the mapping positions of the control data and maps other data, that is, user data, to the mapping positions for other data. When the number of subcarriers the control data outputted from FFT section 103-1 requires is smaller than the number of candidates (the number of pilots) for the mapping position reported from mapping controlling section 109, mapping section 104 allocates the control data outputted from FFT section 103-1 to arbitrary positions among the candidates for the mapping positions and allocates part of the user data to the remaining mapping positions. By this means, it is possible to improve received quality of part of the user data.

The above-described flow is an example of processing of determining a mapping method, and other steps are also applicable. For example, when mapping controlling section 109 can learn the number of subcarriers the control data from FFT section 103-1 requires, it is also possible to adopt a configuration where mapping controlling section 109 determines all mapping positions for control data and user data and reports the mapping positions to mapping section 104.

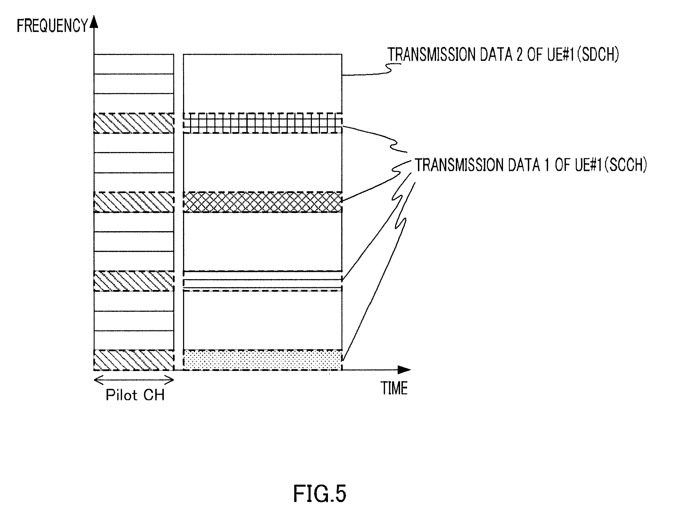

FIG.5 shows an example of a single carrier frame format outputted from mapping section 104.

As shown in this figure, pilots transmitted from the users are mapped to the time slot of the head, and a plurality of data is mapped to the subsequent time slot. In the pilot channel, the pilots transmitted from the radio transmitting apparatus according to this embodiment are shown by diagonal line. Pilots that are not shown by diagonal line are pilots transmitted by other users. The radio transmitting apparatus according to this embodiment maps data 1 (SCCH), which is control data, in frequencies at the same positions as the frequencies where pilots of the radio transmitting apparatus are mapped. An SCCH, which is a control channel, is a channel that requires high channel estimation accuracy.

In this way, according to this embodiment, in single carrier transmission, a plurality of transmission data such as user data and control data is frequency-multiplexed in the same frequency band, and out of the frequency-multiplexed data, control data, that is, data that requires high channel estimation accuracy, is allocated to the same frequencies as the frequencies of pilots and transmitted.

By this means, data which is allocated to the same frequencies as pilots are demodulated using a channel estimation value with high accuracy, and so is not influenced by frequency fluctuation between pilots in a channel. That is, according to this embodiment, it is possible to improve channel estimation accuracy of specific data such as control data and improve received quality.

Further, although an example has been described with this embodiment where control data is mapped in the same frequencies as pilots, it is also possible to adopt a configuration for mapping control data in frequencies in the vicinity of the frequencies of pilots, instead of mapping in the same frequencies. Here, the vicinity is, for example, subcarriers adjacent to the subcarriers of the same frequencies as pilots. The influence of frequency fluctuation between pilots in a channel may be small in the vicinityof the mapping positions of pilots.

Further, although a case has been described as an example with this embodiment where control data is mapped to a time slot immediately subsequent to the pilot time slot, this is by no means limiting, and control data may be mapped to time slots further subsequent to the pilot time slot. This will be described in more details in Embodiment 3.

Although a frame structure has been described as an example with this embodiment where the pilot time slot is arranged at the head, the pilot time slot may not be necessarily arranged at the head. For example, when the pilot time slot is not arranged at the head, control data according to this embodiment may be mapped to time slots after the pilot time slot. Further, targets for mapping control data according to this embodiment are not necessarily time slots following the pilot time slot, and, for example, control data according to this embodiment may be mapped to time slots in the vicinity of the pilot time slot.

Further, although a case has been described as an example with this embodiment where there is one pilot time slot, the number of pilot time slots is not limited to one and pilots may be mapped to two or more time slots. For example, when pilot time slots are arranged at the head and the middle of one subframe, the radio transmitting apparatus according to this embodiment may first determine a certain mapping method for the first half part of the subframe based on pilots in the pilot time slot at the head, and map control data channels and the like according to this mapping method. Next, the radio transmitting apparatus according to this embodiment determines a certain mapping method for the last half part of the subframe based on pilots in the pilot time slot in the middle of the subframe and map control data channels and the like according to this mapping method. As still another embodiment, when there are two or more pilot time slots in one subframe, control data and the like are mapped in time slots for data based on pilots in the nearest pilot time slot.

Further, although a subcarrier has been described as an example with this embodiment, this is by no means limiting, and a resource block comprised of a plurality of subcarriers may be used.

Further, although a case has been described as an example with this embodiment where the radio receiving apparatus has a DFT-s-OFDM section, the configuration of the radio receiving apparatus is not limited to this.

### (Embodiment 2)

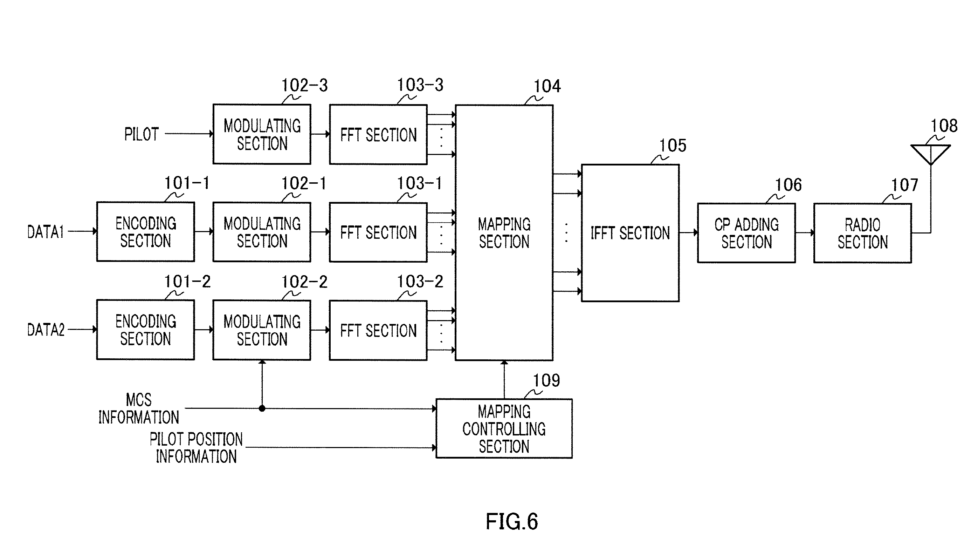

FIG.6 is a block diagram showing the main configuration of the radio transmitting apparatus according to Embodiment 2 of the present invention. This radio transmitting apparatus has the same basic configuration as the radio transmitting apparatus according to Embodiment 1 (see FIG.3), and the same components will be assigned the same reference numerals without further explanations.

The radio transmitting apparatus according to this embodiment regards data that requires high received quality as data that requires high required channel estimation accuracy among a plurality of frequency-multiplexed data, and maps this data preferentially in the same frequencies as the frequency positions of pilots. To be more specific, the radio transmitting apparatus adopts a configuration for switching mapping positions of control data according to received quality of user data. As received quality of user data, an MCS (Modulation and Coding Scheme) level is used.

Differences from Embodiment 1 include that mapping controlling section 109 further receives MCS information. Mapping controlling section 109 controls the mapping method for data 1 and data 2 in the frequency domain based on MCS information and pilot position information, and outputs a mapping control signal to mapping section 104.

Processing of determining a mapping method in mapping controlling section 109 will be described in detail.

Mapping controlling section 109 determines which one of data 1 and data 2 is mapped in the same frequencies as the frequency positions of pilots, in a data slot, based on MCS information for data 2. That is, mapping controlling section 109 decides which data requires higher channel estimation accuracy based on an MCS level. Here, the MCS level can be considered as a parameter showing received quality uniquely. To be more specific, mapping controlling section 109 determines to map data 1 in the same frequencies as the frequency positions of pilots when the MCS level of data 2 is lower than a predetermined threshold, and determines to map data 2 in the same frequencies as the frequency positions of pilots when the MCS level of data 2 is equal to or higher than the predetermined threshold. Here, when the MCS level increases, a modulation scheme with a larger M-ary number is applied or an error correcting code with a higher coding rate is applied, in accordance with an increase of the MCS level.

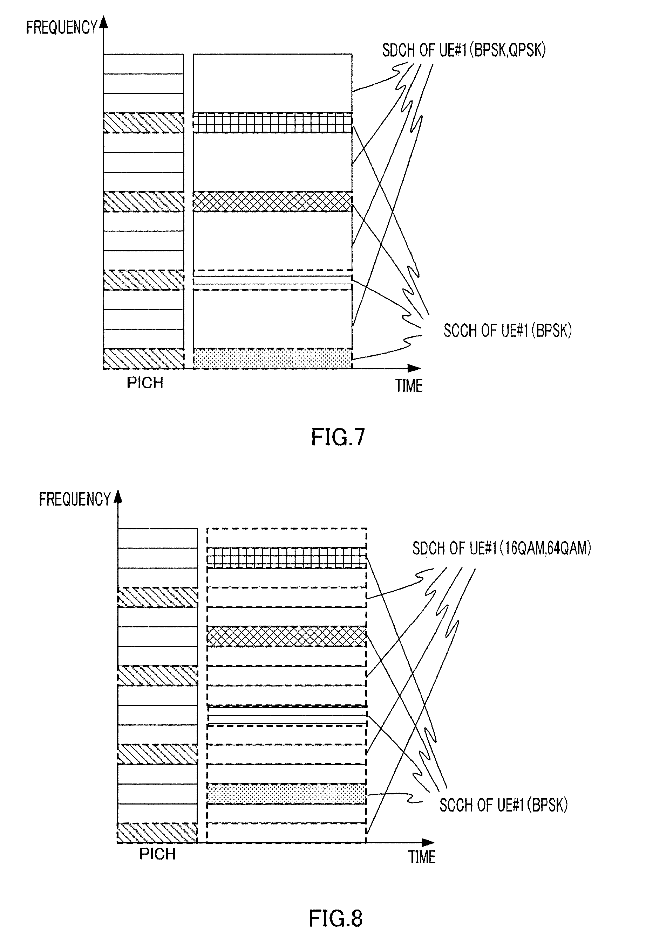

FIG.7 and FIG. 8 show an example of a single carrier frame format outputted from mapping section 104, that is, an example of pilots, data 1 and data 2 mapped in a radio frame using a mapping method determined by mapping controlling section 109. Particularly, FIG.7 shows an outline of mapping a transmission signal to UE when the MCS level of data 2 is low, that is, when the UE is located at a cell edge in a low SIR environment. On the other hand, FIG.8 shows an outline of mapping a transmission signal to the UE when the MCS level of data 2 is high, that is, when the UE is located in a high SIR environment, for example, located near the base station. Here, 16QAM is set as a threshold for the MCS level.

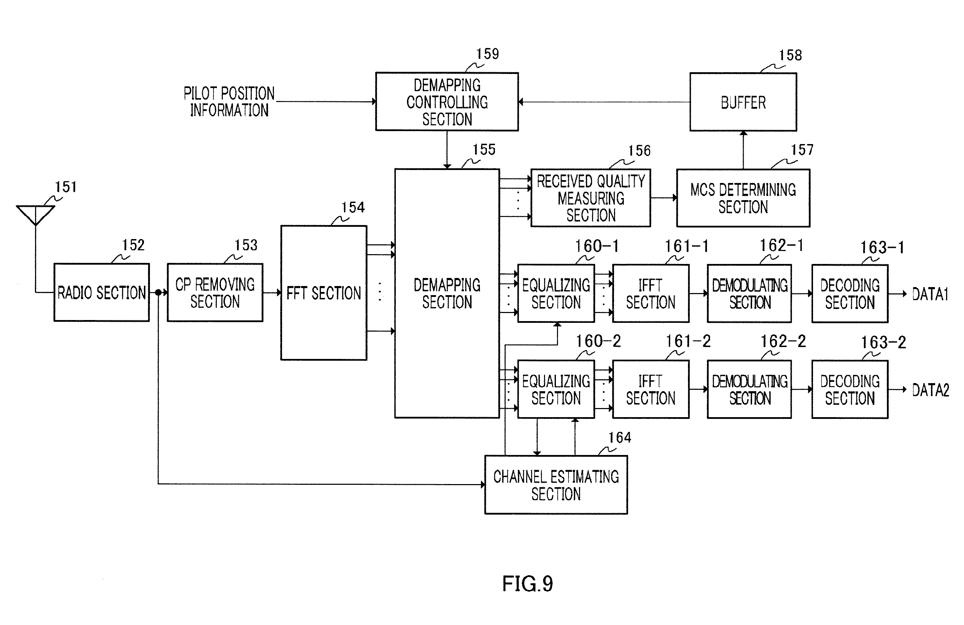

FIG.9 is a block diagram showing the main configuration of the radio receiving apparatus according to this embodiment, which supports the above-described radio transmitting apparatus. A plurality of components having the same functions will be assigned the same reference numerals, and different branch numbers are further assigned following the reference numerals to distinguish between the components. The sections of this radio receiving apparatus perform the following operations.

Radio section 152 converts a signal received through antenna 151 into a baseband signal and outputs the baseband signal to CP removing section 153. CP removing section 153 performs processing of removing the CP from the baseband signal outputted from radio section 152 and outputs the resulting signal to FFT section 154. FFT section 154 performs a fast Fourier transform on the time domain signal outputted from CP removing section 153 and outputs the resulting frequency domain signal to demapping section 155. Under control of demapping controlling section 159, demapping section 155 extracts frequency components of data 1 and data 2 from the received signal subjected to Fourier transform processing, outputs the frequency components of data 1 and data 2 to equalizing sections 160-1 and 160-2, extracts the frequency components of pilots from the received signal subjected to Fourier transform processing and outputs the frequency components of pilots to received quality measuring section 156. Channel estimating section 164 calculates a channel estimation value based on the baseband signal outputted from radio section 152 and outputs the channel estimation value to equalizing sections 160-1 and 160-2. Equalizing sections 160-1 and 160-2 perform frequency domain equalizing processing on the received signals based on the channel estimation value outputted from channel estimating section 164 and output the results to IFFT sections 161-1 and 161-2. IFFT sections 161-1 and 161-2 perform an inverse fast Fourier transform on the signals outputted from equalizing sections 160-1 and 160-2 and output the results to demodulating sections 162-1 and 162-2. Demodulating sections 162-1 and 162-2 perform demodulating processing on the signals subjected to the inverse fast Fourier transform using the same modulation scheme, coding rate and the like, used at the radio transmitting apparatus, and output the demodulated signals to decoding sections 163-1 and 163-2. Decoding sections 163-1 and 163-2 perform error correcting on the demodulated signals and extract data 1 and data 2 from the received signals.

On the other hand, received quality measuring section 156 measures received quality of the received signals from the received pilot signals and outputs the measurement result to MCS determining section 157. MCS determining section 157 determines the MCS at the next transmission timing at the radio transmitting apparatus, which is a communicating party, based on the measurement result of received quality measuring section 156 and outputs the MCS to buffer 158. Buffer 158 stores output of MCS determining section 157 while the radio transmitting apparatus, which is a communicating party, transmits data using the MCS until the radio receiving apparatus receives this data. Demapping controlling section 159 decides which of data 1 and data 2 is mapped in the same frequencies as the frequency positions of pilots based on the MCS stored in buffer 158 and outputs the decision result to demapping section 155. The threshold used by demapping controlling section 159 to decide the data mapping method based on the MCS level is the same value as the threshold used by the radio transmitting apparatus according to this embodiment.

In this way, according to this embodiment, among a plurality of multiplexed data, data that requires high received quality is decided as data that requires high channel estimation accuracy, and this data is preferentially mapped in frequencies where pilots are arranged, according to communication states such as received quality of user data. By this means, it is possible to keep high received quality of data to be multiplexed regardless of frequency fluctuation of a channel.

To be more specific, when the MCS level of user data is low, by allocating control data at the frequency positions of pilots, it is possible to make control data further robust (against errors). Inversely, when the MCS level of user data is high, by allocating user data at the frequency positions of pilots, it is possible to keep the received quality of user data transmitted using higher M-ary modulation to a certain level.

Although a case has been described as an example with this embodiment where 16QAM is used as the threshold for the MCS level used upon data selection, this threshold is not limited to 16QAM.

Further, although a case has been described as an example with this embodiment where there is one threshold for the MCS level used upon data selection, it is also possible to adopt a configuration for providing a plurality of thresholds and controlling mapping positions of data 1 more precisely.

Still further, although a case has been described as an example with this embodiment where an MCS level is used as an index showing received quality, this is by no means, and, for example, a received CIR, received SNR, received SIR, received SINR, received CINR, received power, interference power, bit error rate and throughput may be used.

Furthermore, although a case has been described as an example with this embodiment where the radio receiving apparatus has a DFT-s-OFDM section, the configuration of the radio receiving apparatus is not limited to this.

Further, when data 1, which is control data, is particularly used to control data 2, data 1 may be used for demodulating and decoding processing for data 2.

### (Embodiment 3)

The basic configuration of the radio transmitting apparatus according to Embodiment 3 of the present invention is the same as that of the radio transmitting apparatus according to Embodiment 1 (see FIG.3). Therefore, the same components will be assigned the same reference numerals without further explanations.

Although a case has been described with Embodiments 1 and 2 where control data is mapped to one time slot, control data may be mapped to a plurality of time slots. The radio transmitting apparatus according to this embodiment determines candidates for the mapping positions of control data (in the same frequencies as the frequency positions of pilots), and maps control channels to the mapping candidates which are different according to time slots. To be more specific, control data is frequency-hopped or repeated among different time slots.

Differences from Embodiment 1 include the operation of mapping controlling section 109. Mapping controlling section 109 maps data mapped in the same frequencies as the frequency positions of pilots, to different frequency positions every time the time slot changes (frequency-hopping), or maps the same data to different frequency positions (repetition).

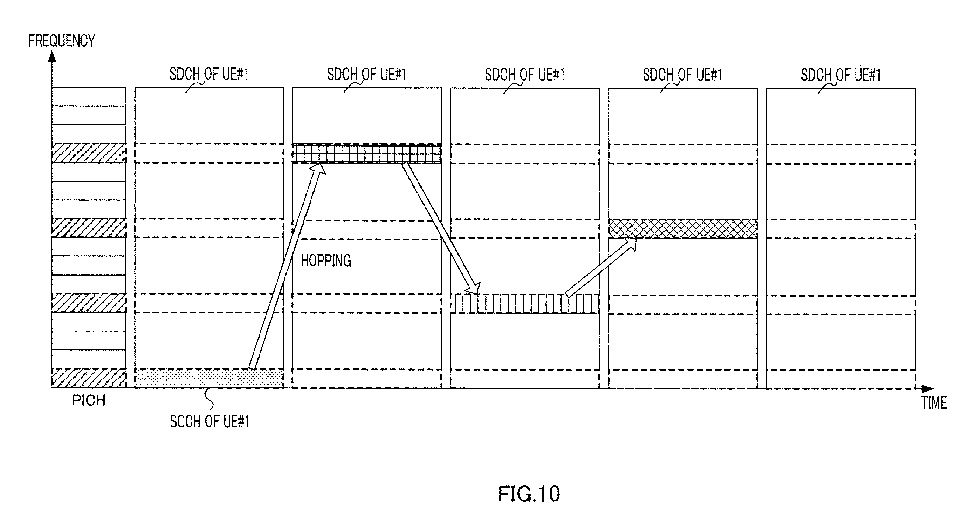

FIG.10 shows an example of a single carrier frame format outputted from mapping section 104 according to this embodiment. Here, an example is shown where data mapped in the same frequencies as the frequency positions of pilots is mapped to different frequency positions every time the time slot changes. In more detail, in FIG.10, sequential frequency components of control data included in an SCCH of UE##1 are mapped to different frequency positions every time the time slot changes and transmitted.

Here, a pattern recorded in a built-in memory of mapping controlling section 109 is used as a frequency-hopping pattern. The number of pilots to be multiplexed and the number of time slots in one subframe are fixed, and so, for example, if the mapping position for control data 1 in the first time slot is determined, the mapping position for control data 1 in the following time slot can be determined uniquely according to the recorded frequency-hopping pattern.

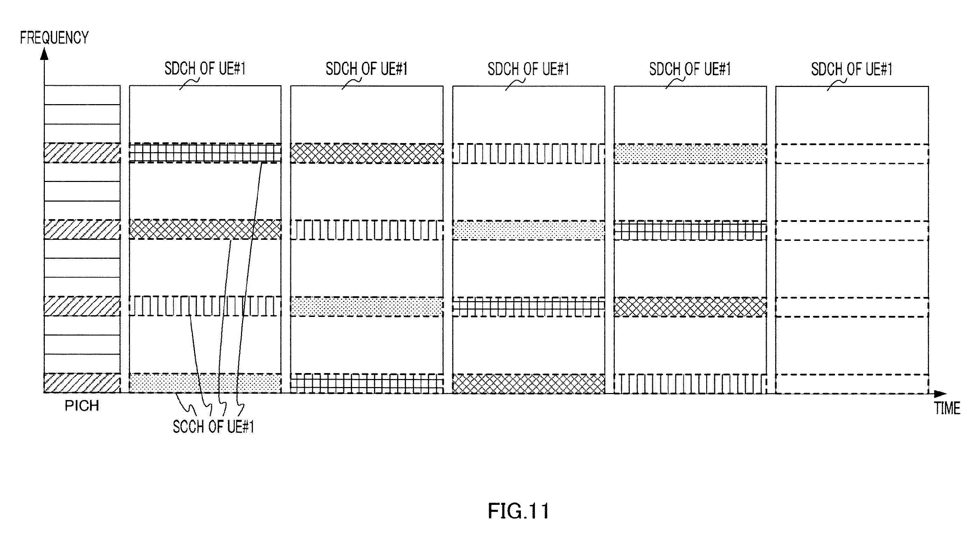

FIG.11 shows another example of a single carrier frame format outputted from mapping section 104 according to this embodiment. Here, an example is shown where data mapped in the same frequencies as the frequency positions of pilots is repeated to different frequency positions every time the time slot changes. That is, control data mapped to the time slots is not sequential data as shown in FIG.1, but is repeated data generated by repeating the same data. The same data is shown by attaching the same hatching.

In the same way as a frequency-hopping pattern, a pattern recorded in a built-in memory of mapping controlling section 109 is used as a repetition pattern to map control data to random frequency positions. To map a plurality of control data at least to different frequency positions without overlap, as shown in FIG.11, there is a mapping method of shifting the mapping positions of control data regularly and sequentially.

In this way, according to this embodiment, when data mapped in the same frequencies as the frequency positions of pilots is frequency-hopped between different time slots, it is possible to improve the time diversity effect and the frequency diversity effect and realize high-quality data transmission. Further, by repeating between different time slots, data mapped in the same frequencies as the frequency positions of pilots, it is possible to improve the time diversity effects and frequency diversity effects and realize high-quality data transmission.

In this embodiment, even if repetition is performed in the same frequency position between different time slots, it is possible to obtain a process gain.

### (Embodiment 4)

The basic configuration of the radio transmitting apparatus according to Embodiment 4 of the present invention is the same as the radio transmitting apparatus according to Embodiment 1 (see FIG.3). Therefore, the same components will be assigned the same reference numerals without further explanations.

The radio transmitting apparatus according to this embodiment provides a bias in the number of control channel data mapped per subframe in the frequency domain and the time domain. To be more specific, (1) setting where the number of control channel data mapped in the time domain is larger than the number of control channel data mapped in the frequency domain, or (2) setting where the number of control channel data mapped in the frequency domain is larger than the number of control channel data mapped in the time domain, is used. These settings are stored in a built-in memory of mapping controlling section 109 as a mapping number rule, and mapping controlling section 109 maps control data according to this recorded rule. Whether in the case of (1) or in the case of (2), the operation of mapping controlling section 109 is only partially different from that in Embodiment 1.

First, the operation of mapping controlling section 109 in the case of above-described (1) will be described.

Mapping controlling section 109 controls mapping section 104 according to the mapping number rule stored in the built-in memory such that, for control data mapped in the same frequencies as the frequency positions of pilots, the number of control data mapped in the time domain becomes larger than the number of control data mapped in the frequency domain.

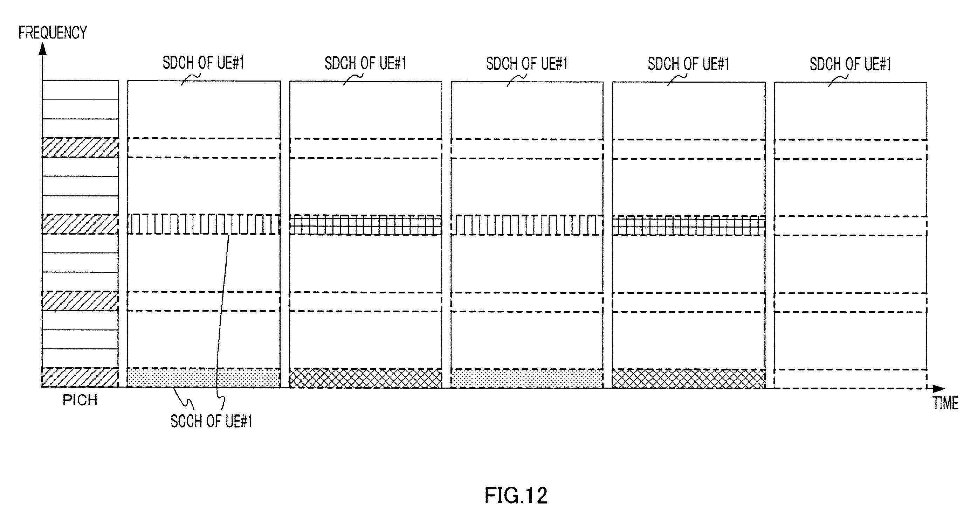

FIG.12 shows an example of a single carrier frame format outputted from mapping section 104 according to this embodiment, that is, a mapping result of each data mapped by mapping section 104, which is controlled by mapping controlling section 109. Here, an example is shown where the number of control data mapped in the frequency domain is set two and the number of control data mapped in the time domain is set four in the built-in memory of mapping controlling section 109, as a setting where the number of control data mapped in the time domain is larger than the number of control data mapped in the frequency domain.

According to the above configuration, the number of control channels mapped in the frequency domain is reduced, so that it is possible to prevent an increase of the PAPR (Peak to Average Power Ratio) uponmultiplexing control channels and data channels, and, as a result, improve received quality.

Next, the operation of mapping controlling section 109 in the case of above-described (2) will be described.

Mapping controlling section 109 controls mapping section 104 according to the mapping number rule stored in the built-in memory such that, for control data mapped in the same frequencies as the frequency positions of pilots, the number of control data mapped in the frequency domain becomes larger than the number of control data mapped in the time domain.

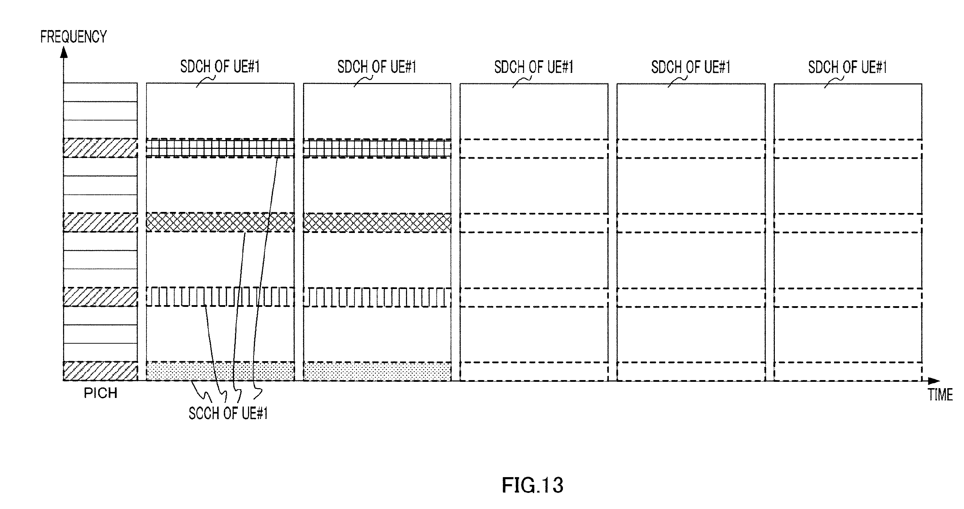

FIG.13 shows an example of a single carrier frame format outputted from mapping section 104 according to this embodiment, that is, a mapping result of each data mapped by mapping section 104 which is controlled by mapping controlling section 109. Here, an example is shown where the number of control data mapped in the frequency domain is set four and the number of control data mapped in the time domain is set two in the built-in memory of mapping controlling section 109, as a setting where the number of control data mapped in the frequency domain is larger than the number of control data mapped in the time domain. Further, it is preferable to demodulate control channels before demodulation of data channels, and so it is preferable to map control channels to time slots as close as possible to the head of the reception unit such as a subframe.

According to the above configuration, by decreasing the number of control data mapped in the time domain and arranging the control data at the head of the subframe, control data can be demodulated before reception of user data, so that it is possible to reduce delay in processing up to demodulation of user data.

In this way, according to this embodiment, there is a bias in the number of control channel data mapped in one subframe in the frequency domain and the time domain, and so it is possible to reduce the PAPR and reduce processing delay, and, as a result, improve received quality.

In this embodiment, it is also possible to adopt a configuration of switching between (1) and (2) adaptively according to the moving speed of UE. To be more specific, if the moving speed of the user is less than a given threshold, the operation of above (1) is applied, and, if the moving speed is greater than the threshold, the operation of above (2) is applied. By this means, when the moving speed of the user is fast, by arranging data that requires high channel estimation accuracy at positions temporally close to pilots, it is possible to respond to fading fluctuation in the time domain.

### (Embodiment 5)

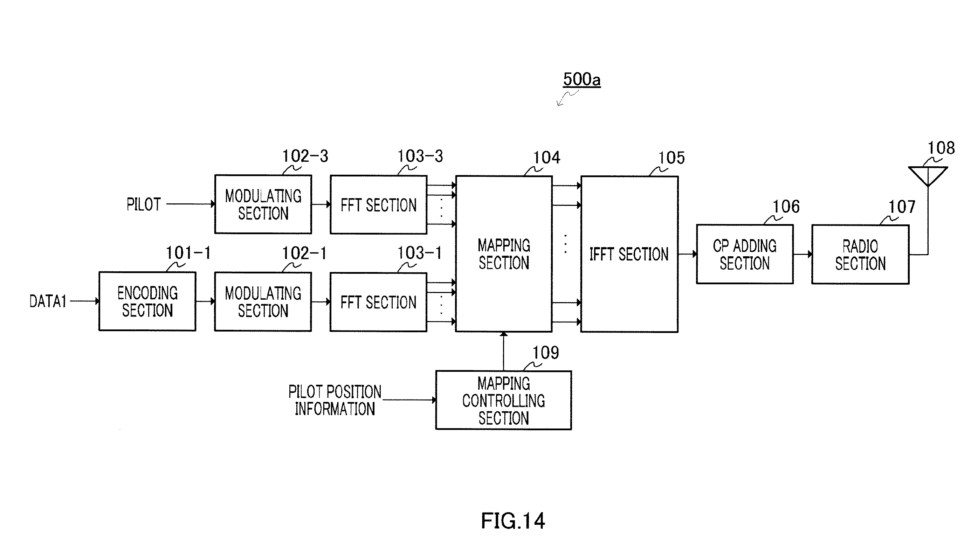

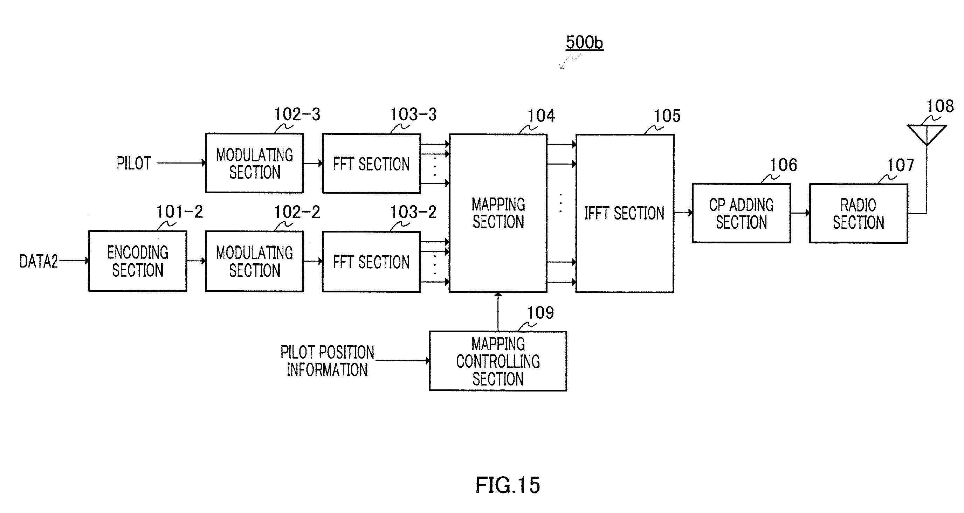

FIG.14 is a block diagram showing the main configuration of radio transmitting apparatus 500a according to Embodiment 5 of the present invention, and FIG.15 is a block diagram showing the main configuration of radio transmitting apparatus 500b according to Embodiment 5 of the present invention. The same components as those in the radio transmitting apparatus according to Embodiment 1 (see FIG.3) will be assigned the same reference numerals.

Radio transmitting apparatus 500a and radio transmitting apparatus 500b are radio transmitting apparatuses of different users and synchronized with each other, and so transmission data is mapped in the frequency domain in the same time slot in a transmission frame. Here, data mapped in the same frequencies as the frequency positions of pilots is, for example, data in contention based channels for transmitting RACHs (Random Access Channels) and the like. Contention based channels are not scheduled, and so may contend with each other.

Although data 1 and data 2 are frequency-multiplexed and transmitted from the same radio transmitting apparatus in Embodiment 1, in this embodiment, data 1 is transmitted from radio transmitting apparatus 500a and data 2 is transmitted from radio transmitting apparatus 500b.

To be more specific, mapping controlling section 109 in radio transmitting apparatus 500a of user #1 maps frequency components of pilots in the frequency domain in the pilot time slot according to pilot position information. Further, mapping controlling section 109 in radio transmitting apparatus 500b of user #2 also maps frequency components of pilots in the frequency domain in the pilot time slot according to the pilot position information. At this time, frequency positions where pilot signals are mapped are determined so as to be different between user #1 and user #2.

On the other hand, in a time slot for transmitting data, mapping controlling section 109 in radio transmitting apparatus 500a of user #1 maps data 1 in the same frequencies as the frequency positions of pilots. Mapping controlling section 109 in radio transmitting apparatus 500b of user #2 maps data 2 in frequencies that are not used by user #1.

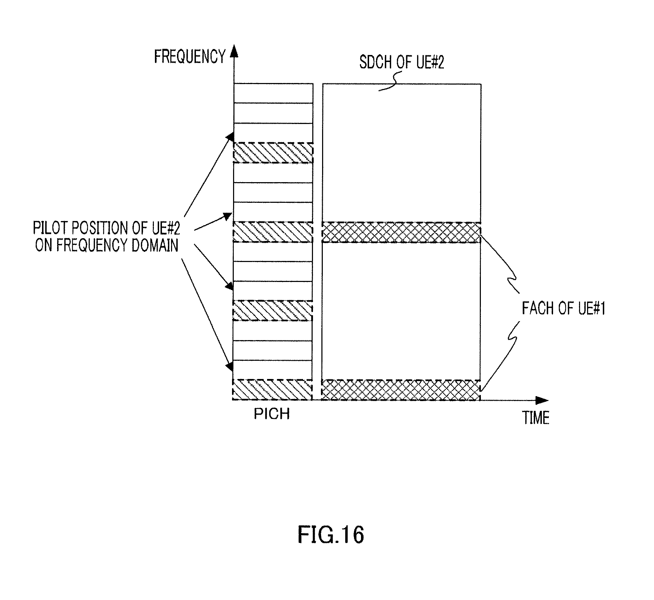

FIG.16 shows an example of a signal that multiplexes data for user #1 transmitted from radio transmitting apparatus 500a and data for user #2 transmitted from radio transmitting apparatus 500b in air.

As shown in this figure, pilots are mapped in the time slot at the head (pilots of other users for CQI measurement use are also shown), and, in the next time slot, the FACH (Fast Access Channel) for user #1, which is one type of the RACH, and the SDCH for user #2 are multiplexed and mapped. Here, an example is shown where data 1 for user #1 is mapped in the same frequencies as the frequency positions of pilots.

In this way, according to this embodiment, by mapping data that requires high channel estimation accuracy in pilot positions among a plurality of users, high-quality transmission can be realized even in a multi-user environment, so that it is possible to improve systemthroughput. Further, it is not necessary to ensure resources separately for pilots for contention-based data, so that it is possible to improve use efficiency of resources.

Although a case has been described as an example with this embodiment where an FACH is used as data 1 for user #1, it is also possible to use a contention-based channel such as an RCH (Reservation Channel), SCH (Synchronization Channel) and synchronous RACH (Random Access Channel).

Further, although a case has been described with this embodiment where the number of users is two, the number of users may be three or more.

Further, data 2 transmitted by user #2 may be transmitted using the frequency positions used by user #1 for transmission. In this case, to reduce interference from data 1 to data 2, there is a configuration of transmitting data 1 at a plurality of frequency positions using low transmission power.

Embodiments of the present invention have been described.

The radio transmitting apparatus and radio transmission method according to the present invention are not limited to the above-described embodiments, but can be implemented with various modifications. For example, in addition to Embodiment 4, frequency-hopping as described in Embodiment 3 may be used in combination. By this means, flexibility of frequency hopping is improved, and, consequently, a diversity gain is further improved, and high-quality transmission can be realized. In this way, the embodiments may be implemented by combining them as appropriate.

The radio transmitting apparatus according to the present invention can be provided to communication terminal apparatuses and base station apparatuses in a mobile communication system, and, by this means, it is possible to provide a communication terminal apparatus, base station apparatus and mobile communication system having the same operational effects as described above.

Although a configuration of the radio transmitting apparatus using DFT-s-OFDM has been described as an example, it is also possible to use an IFDMA configuration and normal single carrier transmissionconfiguration. However, inaconfiguration using DFT-s-OFDM, a plurality of data can be multiplexed on the frequency domain in a simple manner, and, further, a frequency multiplexing method that does not cause interference between different data can be employed. Therefore, compared to other configurations, the configuration using DFT-s-OFDM may be the most suitable embodiment.

Further, although a control channel has been described as an SCCH in this specification, it is also possible to use, for example, an HS-SCCH and HS-DPCCH, which are channels associated with an HS-DSCH, or a DCCH, S-CCPCH, P-CCPCH, PCH and BCH for reporting control information for RRM (Radio Resource Management), or a DPCCH for controlling a physical channel, which are based on 3GPP standards.

Further, although a data channel has been described as an SDCH in this specification, it is also possible to use, for example, an HS-DSCH, DSCH, DPDCH, DCH, S-CCPCH or FACH, which are based on 3GPP standards.

Still further, channel quality indicator CQI may be described as CSI (Channel State Information) and the like.

Furthermore, although a unit of time for frequency-multiplexing a plurality of data has been described as a time slot, a unit of time for multiplexing pilots may be described as an SB or short block, for example. Further, a unit of time for multiplexing data may be described as an LB or long block.

Here, the case where the present invention is implemented by hardware has been explained as an example, but the present invention can also be implemented by software. For example, the functions similar to those of the radio transmitting apparatus according to the present invention can be realized by describing an algorithm of the radio transmission method according to the present invention in a programming language, storing this program in a memory and causing an information processing section to execute the program.

Each function block used to explain the above-described embodiments may be typically implemented as an LSI constituted by an integrated circuit. These may be individual chips or may partially or totally contained on a single chip.

Furthermore, here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application of biotechnology is also possible.

The present application is based on Japanese Patent Application No.2005-321111, filed on November 4, 2005, the entire content of which is expressly incorporated by reference herein.

### Industrial Applicability

The radio transmitting apparatus and radio transmission method according to the present invention are applicable to communication terminal apparatuses, base station apparatuses and the like in a mobile communication system.

## Claims

1. A radio transmitting apparatus comprising:
a pilot multiplexing section that performs frequency division multiplexing on pilots to a first time slot;
a data multiplexing section that performs frequency division multiplexing on data other than the pilots to time slots other than the first time slot; and
a controlling section that controls the data multiplexing section such that, out of the data other than the pilots, data that requires high channel estimation accuracy is multiplexed in same frequencies as the pilots.

2. The radio transmitting apparatus according to claim 1, wherein the data that requires high channel estimation accuracy comprises control channel data or data with a modulation and coding scheme level equal to or higher than a threshold.

3. The radio transmitting apparatus according to claim 1, further comprising a repetition section that repeats the data that requires high channel estimation accuracy,
wherein the data multiplexing section performs frequency division multiplexing on the repeated data that requires high channel estimation accuracy to a plurality of time slots other than the first time slot.

4. The radio transmitting apparatus according to claim 1, wherein the controlling section controls the data multiplexing section such that frequencies of the data that requires high channel estimation accuracy are different between time slots.

5. The radio transmitting apparatus according to claim 4, further comprising a repetition section that repeats the data that requires high channel estimation accuracy,
wherein the controlling section controls the data multiplexing section such that frequencies of the repeated data that requires high channel estimation accuracy are different between time slots.

6. The radio transmitting apparatus according to claim 1, wherein the controlling section controls the data multiplexing section such that a number of the data that requires high channel estimation accuracy multiplexed in a time domain becomes larger than a number of the data that requires high channel estimation accuracy multiplexed in a frequency domain.

7. The radio transmitting apparatus according to claim 6, wherein the controlling section further controls the data multiplexing section such that frequencies of the data that requires high channel estimation accuracy are different between time slots.

8. The radio transmitting apparatus according to claim 1, wherein the controlling section controls the data multiplexing section such that the data that requires high channel estimation accuracy is subjected to frequency division multiplexing in time slots closer to the first time slot, out of the plurality of time slots other than the first time slot.

9. The radio transmitting apparatus according to claim 1, wherein the controlling section controls the data multiplexing section such that, according to a moving speed of a radio receiving apparatus, a number of the data that requires high channel estimation accuracy multiplexed in a time domain becomes larger than the number of the data that requires high channel estimation accuracy multiplexed in a frequency domain, or a number of the data that requires high channel estimation accuracy multiplexed in the time domain becomes smaller than a number of the data that requires high channel estimation accuracy multiplexed in the frequency domain.

10. A communication terminal apparatus comprising the radio transmitting apparatus according to claim 1.

11. A base station apparatus comprising the radio transmitting apparatus according to claim 1.

12. A radio transmission method comprising:
a first step of performing frequency division multiplexing on pilots to a first time slot; and
a second step of performing frequency division multiplexing on data other than the pilots to time slots other than the first time slot,
wherein the second step is controlled such that, out of the data other than the pilots, data that requires high channel estimation accuracy is multiplexed in same frequencies as the pilots.
